# EUROPEAN PATENT SPECIFICATION

(11) **EP 1 672 574 B1**
(45) Date of publication and mention of the grant of the patent: **23.01.2008**
(21) Application number: 04257821.1
(22) Date of filing: 15.12.2004
(51) Int. Cl.: G06Q 10/00

(54) **Compressible display of e-mail message string to facilitate readability**
Komprimierbare Anzeige der Nachrichtenzeichenkette einer E-mail zum Erleichtern der Lesbarkeit
Affichage compressible de la suite de caractères d'un message de E-mail pour faciliter la lisibilité

(43) Date of publication of application: 21.06.2006
(73) Proprietor: Research In Motion Limited, Waterloo, Ontario N2L 3W8 (CA)
(72) Inventor: Brown, Michael K., Kitchener, Ontario N2M 2Z2 (CA); Brown, Michael S, Waterloo, Ontario N2K 4B1 (CA)
(74) Representative: Roberts, Gwilym Vaughan

(56) References cited:
- EP-A- 1 220 520
- JP-A- 9 190 328
- US-A1- 2002 073 157
- US-A1- 2004 044 735
- US-A1- 2004 225 901
- "NEXT BUTTON FOR JUMPING / TABBING BETWEEN INTERNET HYPERTEXT TRANSFER PROTOCOL HYPERLINKS" IBM TECHNICAL DISCLOSURE BULLETIN, IBM CORP. NEW YORK, US, vol. 41, no. 1, 1998, page 435, XP000772162 ISSN: 0018-8689

## Description

### BACKGROUND OF THE INVENTION

### 1. Technical Field

This invention deals generally with method and apparatus for improving the readability of email message strings.

### 2. Related Art

Many times the originator of a message will initiate an email "conversation" which causes many subsequent replies and re-replies and/or, forwardings (perhaps to and from multiple recipients/senders). The result can be a long string of individual email messages. Unfortunately, the message headers associated with each individual reply or forwarding or the like are also included in a typical display of a raw string of related email messages.

This can make later (or even current) comprehension of the entire email exchange difficult. This is especially so when the email message string is displayed on a relatively small screen (e.g., on a handheld wireless communication device or the like which may only be able to display a relatively limited number of text lines simultaneously on the screen). Of course, as most will appreciate, this same sort of problem can occur even on larger screens such as are available on typical personal computers and the like.

While such email message strings may of course be edited by highlighting and deleting portions and thus eliminating redundant material or the like, such traditional editing efforts are time consuming and may become complex (depending upon the size of the string and/or the nature of the editing software). In addition, such traditional editing of the string may accidentally result in loss of the desired message body portion of some message (i.e., of material that is actually not redundant).

US-A1-2002/0073157 addresses the problem of redundant or irrelevant material in digested email threads. By contrast, embodiments of the present invention address a different problem.

### BRIEF SUMMARY

According to one aspect of this invention, there is provided a method as defined in claim 1 of the appended claims.

According to another aspect of this invention, there is provided apparatus as defined in claim 5.

We have recognized that it would be very useful to provide a convenient way for a reader to automatically but controllably skip less meaningful portions of the email message string.

For example, if each successive reply and/or forward includes both a message header text and message body text, it may be convenient to permit deletion of some or all of the message header text so as to effectively compress the display of email exchanges into a simultaneous (or more nearly simultaneous) display of all meaningful text on the available display area. Moving automatically from one message body to the next in response to a single key actuation or the like would also provide a benefit and improve readability. This also effectively "compresses" the complete email string such that meaningful message body parts can be successively accessed for viewing by successive actuations of a "hot" key on the keyboard or the like. A context sensitive menu item might also be employed to permit a selective user command of some pre-defined type to be detected and acted upon in this manner.

In short, trying to read a message that is made up of multiple forwards and/or replies can be very difficult on a device with a small screen. This is because in between each message "part" there is a message header which can be multiple screen fulls in size (especially on smaller screens). It would be nice to have a method to skip from one message string "part" to the next.

This can be accomplished through either a hot key or a context sensitive menu item or some other convenient way for a user to provide a predetermined "skip" command to an associated display unit processor. For example, a message with multiple forwards/replies in it might look like:
Lets meet at Timmy's
----Original Message----
From: Bob
Sent: October 8, 2004 1:00 PM
To: Bill
Subject: RE: Where to meet for lunch
Ok, where should we meet?
----Original Message----
From: Bill
Sent: October 8, 2004 12:30 PM
To: Box
Subject: Where to meet for lunch
Want to go for lunch?

On some smaller handheld displays, the message header can fill up much of the screen. Even worse, message headers that contain many recipients can fill up multiple screens.

Upon invoking, e.g., a hot key/menu item, one may skip down to the first line after the "Subject" line. If no such line exists, the display may stay where it is and a dialog box may pop up to tell the user that there are no more message parts.

So in the above example, if the cursor was on the "Let's meet at Timmy's line, then a skip could take the cursor and display to the "Ok, where should we meet?" line.

This is especially beneficial when one is reading something included in the middle of an email thread because one could then quickly read through the previous parts of the thread and catch up with what is going on. Of course there also could be a hot key to go back upwards through the message parts, rather than just scanning in one direction.

This invention may be embodied in hardware, software or a combination of hardware and software. The invention also provides a method for providing a compressible display of email message strings to facilitate readability - especially in a small handheld wireless communication device. The exemplary embodiment is realized, at least in part, by executable computer program code (i.e., logic) which may be embodied in physical program memory media.

### BRIEF DESCRIPTION OF THE DRAWINGS

These and other objects and advantages of this invention will be better understood and appreciated in conjunction with the following detailed description of exemplary embodiments taken together with the accompanying drawings, of which:
FIG. **1** is an overall system wide schematic view of an exemplary wireless email communication system incorporating a mobile wireless communication device with a selectively compressible display of email string feature;
FIG. **2** is an abbreviated schematic diagram of hardware included within an exemplary mobile wireless communication device of FIG. **1;**
FIGS. **3-5** are exemplary abbreviated schematic flow charts of computer software (i.e., program logic) that are useful in understanding the invention and that may be utilized in the device of FIG. **2** so as to provide a feature permitting compressible display of email message strings to facilitate readability; and
FIGS. **6A.6F** illustrate an embodiment of the invention and show successive modification of an email message string having message headers and message bodies as it is successively processed to evermore simpler formats for compressed display.

### DETAILED DESCRIPTION OF EXEMPLARY EMBODIMENTS

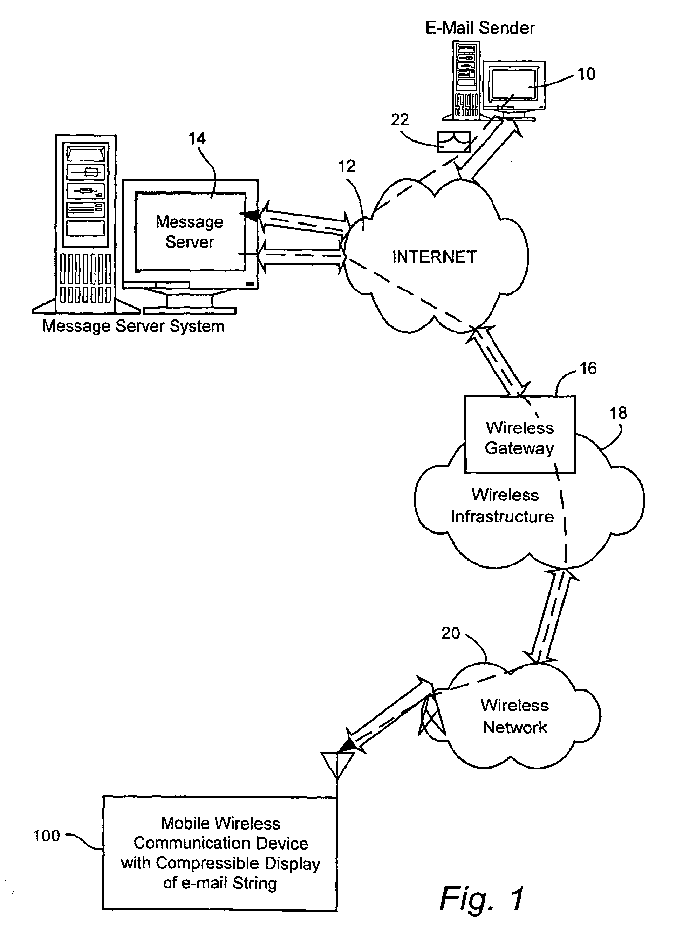

FIG. **1** is an overview of an exemplary communication system in which a wireless communication device **100** may be used in accordance with this invention. One skilled in the art will appreciate that there may be hundreds of different system topologies. There may also be many message senders and recipients. The simple exemplary system shown in FIG. **1** is for illustrative purposes only, and shows perhaps the currently most prevalent Internet email environment.

FIG. **1** shows an email sender **10,** the Internet **12,** a message server system **14,** a wireless gateway **16,** wireless infrastructure **18,** a wireless network **20** and a mobile communication device **100.**

An email sender **10** may, for example, be connected to an ISP (Internet Service Provider) on which a user of the system has an account, located within a company, possibly connected to a local area network (LAN), and connected to the Internet **12,** or connected to the Internet **12** through a large ASP (application service provider) such as America Online^{™} (AOL). Those skilled in the art will appreciate that the systems shown in FIG. **1** may instead be connected to a wide area network (WAN) other than the Internet, although email transfers are commonly accomplished through Internet-connected arrangements as shown in FIG. **1.**

The message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange^{™} and Lotus Domino^{™}. These products are often used in conjunction with Internet mail routers that route and deliver mail. These intermediate components are not shown in FIG. **1,** as they do not directly play a role in the invention described below. Message servers such as server **14** typically extend beyond just email sending and receiving; they also include dynamic database storage engines that have predefined database formats for data like calendars, to-do lists, task lists, email and documentation.

The wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1,** a composed email message **22** is sent by the mail sender **10,** located somewhere on the Internet **12.** This message **22** typically uses traditional Simple Mail Transfer Protocol (SMTP), RFC 822 headers and Multipurpose Internet Mail extension (MIME) body parts to define the format of the mail message. These techniques are all well known to those skilled in the art. The message **22** arrives at the message server **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer which belongs to the user of a mobile device **100** are redirected from the message server **14** to the mobile device **100** as they are received.

Regardless of the specific mechanism controlling forwarding of messages to mobile device **100,** the message **22,** or possibly a translated or reformatted version thereof, is sent to wireless gateway **16.** The wireless infrastructure **18** includes a series of connections to wireless network **20.** These connections could be Integrated Services digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex^{™} Radio Network and the DataTAC^{™} Radio Network. Examples of older voice-centric data networks include Personal Communication Systems (PCS) networks like GSM, and TDMA systems.

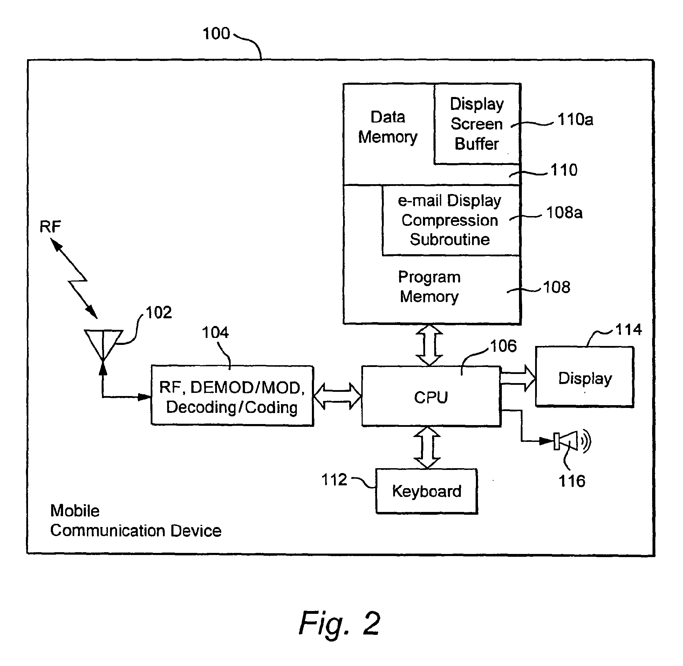

As depicted in FIG. **2,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **100**). CPU **106** also communicates with a conventional keyboard **112,** display **114** (e.g., an LCD) and audio transducer or speaker **116.** A portion of program memory **108a** available for storing one or more program sub-routines (i.e., program executable code or logic) for controllably compressing the display of an email message string. As will also be appreciated, a display screen buffer **110a** will typically store a file (e.g., an email message string) which is at least partially displayed at **114.**

In most email display apparatus (e.g., like mobile communication device **100**), a file of text including a complete email message string will reside in data memory and some or all of it will appear in a display screen buffer (including at least the portion of the entire file that is currently being displayed on the screen). This text file is "open" and available for text editing. The exemplary embodiment of this invention provides automated text editing of a particular type. However, those in the art will recognize that other kinds of automated text editing may also be used for effectively "compressing" the email message string so as to improve its readability (i.e., by either skipping around automatically in the email chain, thread or string and/or by automatically deleting all or portions of less important pieces of the string (e.g., headers)).

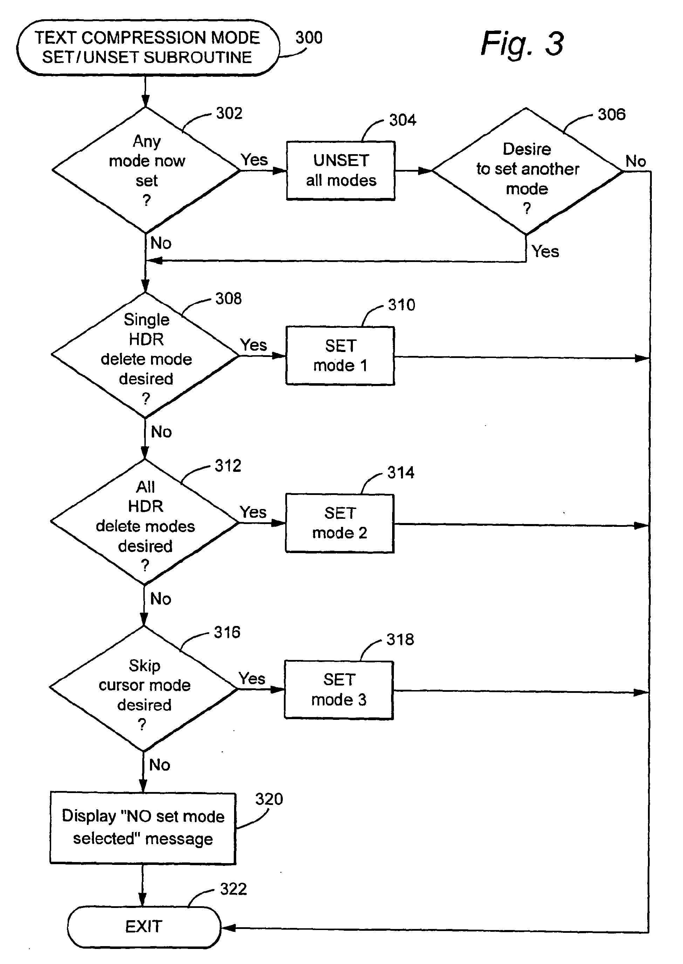

As is well known, many if not most computer driven devices with keyboards have "hot" keys (or key combinations) which, when actuated by the user, cause an immediate predetermined response associated with the hot key functionality that has been defined in logic for that particular key in given modes of operation. That is, conventional keyboard monitoring software/hardware routinely watches for the next key stroke (and/or simultaneous actuation of predetermined combinations of keys) and takes appropriate action depending upon which key (keys) has (have) been actuated. When an email display apparatus is put into the automatic "compression" editing mode in accordance with the exemplary embodiment, then there is at least one user action (e.g., the activation of a particular "hot" key) which will thereafter invoke certain automatic text editing and/or display skipping logic such as that depicted in FIGS. **3-5.**

If a text compression mode of operation is desired, then a mode set/unset subroutine can be entered at **300** as shown in FIG. **3..** If any text compression mode is already set as tested at **302,** then all modes are reset at **304** and an inquiry is made at **306** to detect a possible desire to set another mode. At **308, 310** the user is given an option to set a single header delete mode. At **312, 314** the user is given an option to set an all header delete mode. At **316, 318** the user is given an option to set a skip cursor mode. If no options are taken, a no set mode selected message is displayed at **320** before the subroutine is exited at **322.**

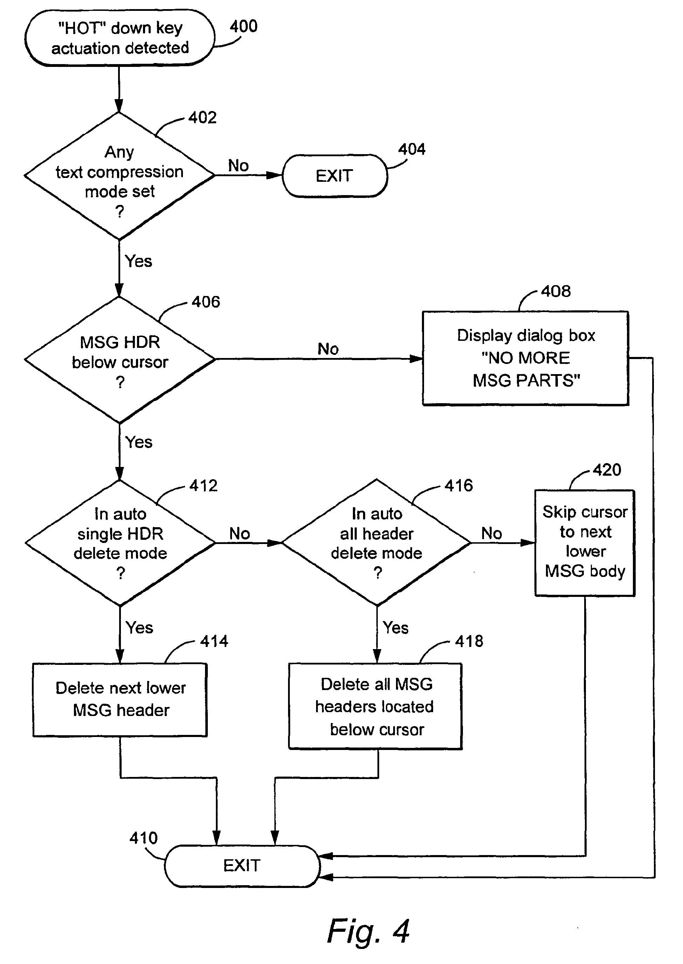

As depicted in FIG. **4,** if a hot key "down" is actuated (e.g., "D" or "S" or the like as determined by appropriate hot key definition software), a logic of FIG. 4 is entered at **400.** A test is made at **402** to find out if any text compression mode is set. If not, then an immediate exit is taken at **404.** If a text compression mode is set, then a test is made at **406** to find out if there is any email message located below the current cursor position. If not, then a suitable dialog box indicating "no more message parts" may be displayed at **408** and the routine exited at **410** as indicated in FIG. **4.** On the other hand, if there is still a message located below the current location of the cursor, then at **412** at test is made for single header mode and, if set, then the next lower message header may be deleted at **414** from the display automatically. Similarly, if the all header delete mode is detected at **416,** then all lower message headers are deleted at **418.** If the skip cursor mode is set, then the cursor is automatically skipped downward at **420** to the next lower message body.

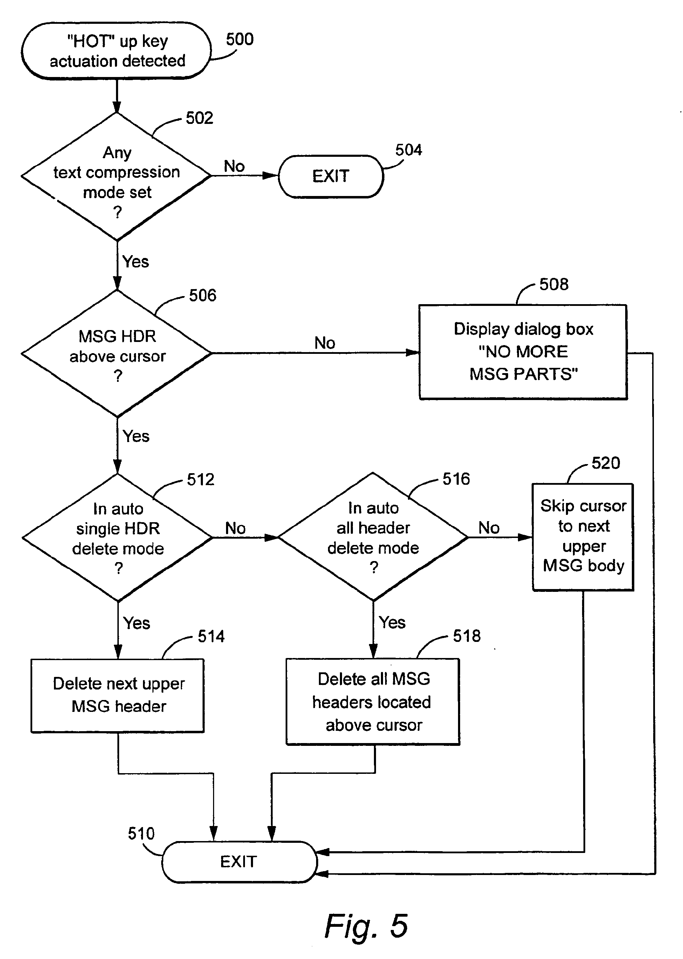

Similarly, the logic of FIG. 5 is entered at **500** (e.g., when a different "hot" key "up" is activated such as, for example, the "W" or "U" key). The flowchart elements in FIGS. **4** and **5** having the same lower order digits are analogous except for direction of actions. For example, now moving in the upward direction rather than the downward direction, a test is made at **506** to see if there is any message displayed above the current cursor location. If not, then at **508** a suitable dialog box message is displayed indicating that there are no more message parts to be processed thereabove. On the other hand, if there is still at least a message above the cursor, then at **512** the next upper message header may be automatically deleted at **514** or, depending upon the user selected mode of operation, the cursor may simply be skipped at **520** ahead to the next higher message body in the string.

As those in the art will appreciate, the hot key definition may require two or more physical keys to be simultaneously actuated or sequentially actuated and/or may require the user to enter a particular menu selected mode of operation before becoming active.

A mode that embodies the invention and in which single message header portions are successively and automatically deleted will now be described.

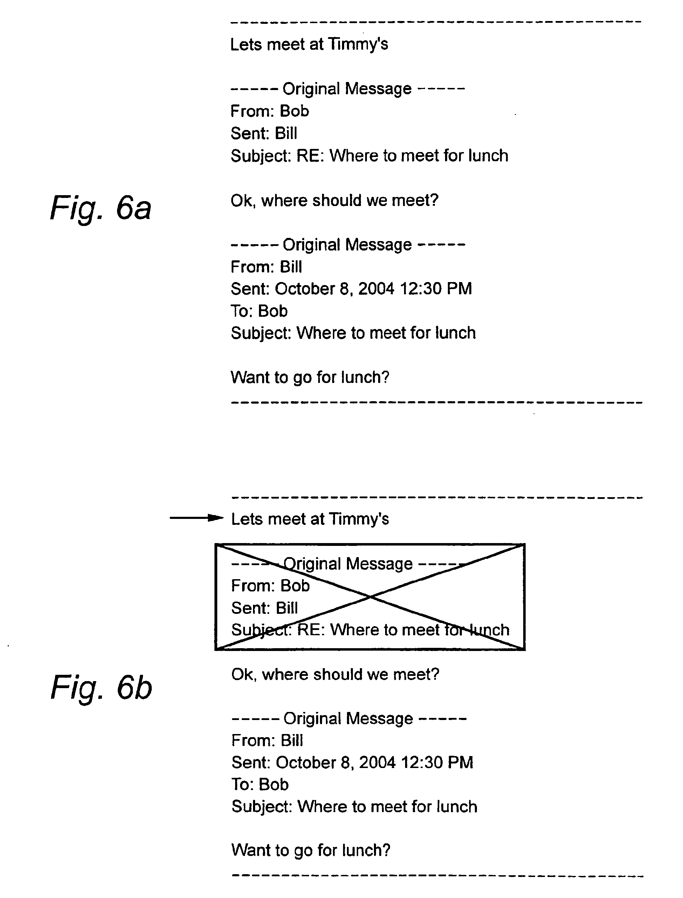

Assuming that the user has selected the mode for successive automatic deletion of single message header portions, a sequential actuation of the hot "down" key may cause a sequence of operations as illustrated in FIGS, **6A-6F.** For example, shown in FIG. **6A,** a complete email message string includes a lowermost original message with header as well as message body and a second reply original message located there just above also having a header as well as message body and a third reply message body at the very top.

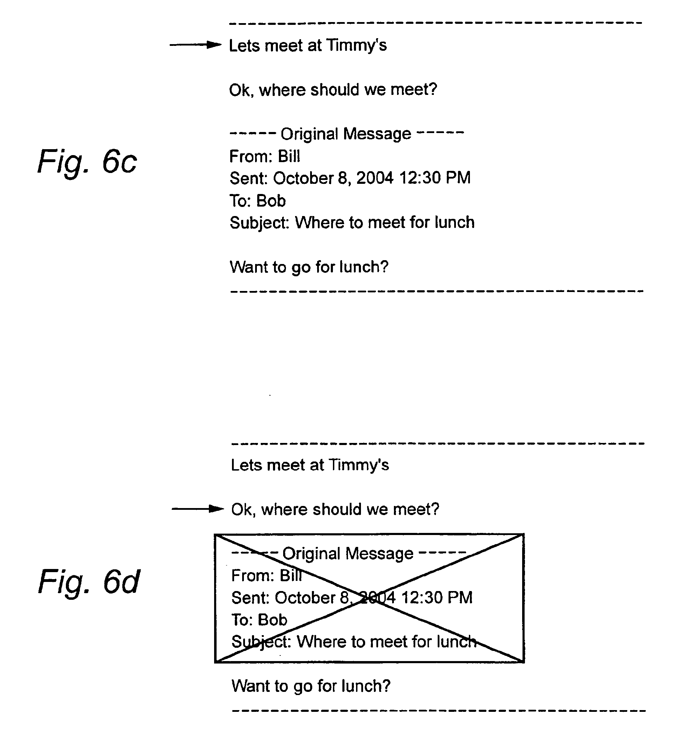

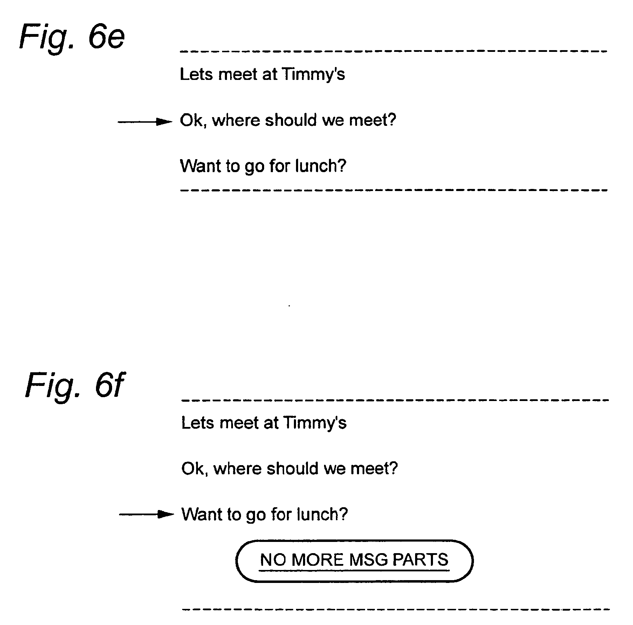

If the user positions the cursor as depicted by the arrow at the top of the string in FIG. **6B** and actuates the hot "down" key, then the message header portion just there below (indicated with a crossed box) is automatically deleted so as to result in a compressed email string as depicted at FIG **6C,** Using the exemplary embodiment of FIG. **4,** even without moving the cursor, another actuation of the "hot" down key would cause deletion of the next successive message header portion in the downward direction as depicted in FIG. **6D** so as to result in the further compressed email string depicted at FIG. **6E,**

Once again, in the exemplary embodiment of FIG. **4,** even if the cursor is not moved by the user, another depression of the "hot" down key would result in finding no more message headers therebelow so the dialog box displaying "no more message parts" would be displayed instead as shown in FIG. **6F.**

Of course, if the tests being made at **406** and **506** are looking only for any immediately adjacent portion of a message (i.e., either header or body), then the user would have to move the cursor into successive positions as shown in FIGS. **6A-6F** in order to obtain the same end result. However, in the examples of FIGS. **3-5,** the test at **406** and **506** is actually looking for any message headers (below or above the cursor, respectively) and therefore the cursor could be left fixed at some particular starting point as may be desired by the user.

## Claims

1. A method for improving readability of an email message string displayed on a handheld sized mobile wireless communication device having a correspondingly limited display area, the string including successive message headers with their respective associated message bodies by:
automatically determining parts of such message string having possibly greater interest to a reader;
displaying at least a portion of a complete email message string including successive message headers with their respective associated message bodies; and
displaying one such determined part of the email message string so as to enhance its readability,
said method being **characterized by**:
the step of displaying the one such determined part comprising automatically deleting from such display one message header upon a pre-defined user command being detected;
upon each repetition of said pre-defined user command being detected, automatically deleting from such display one further message header if such is still present, said successive deletions beginning at a user-marked location in the display;
said complete email message string exceeding an available capacity for simultaneous display of successive text lines; and
successive repetition of said pre-defined user command causing increasing lines of remaining message body text to be simultaneously displayed to the user.

2. A method as in claim 1 wherein said pre-defined user command is effected by actuation of at least one hot key on a keyboard associated with a device on which said display appears.

3. A method as in claim 1 wherein successive deletions occur in a downward direction through the message string.

4. A method as in claim 1 wherein successive deletions occur in an upward direction through the message string.

5. A handheld sized mobile wireless communication device having a correspondingly limited display area, the device comprising an email display apparatus capable of:
compressing display of an email message string to improve readability of the email message string by automatically determining parts of such message string having possibly greater interest to a reader, the apparatus comprising a visual display capable of displaying at least a portion of a complete email message string including successive message headers with their respectively associated message bodies; and
displaying one such determined part of the email message string so as to enhance its readability,
said apparatus being **characterized by** an email display processor including a user command detector and processor which, upon detecting such command, automatically deletes from such display one message header; said processor being adapted, upon detecting a repetition of said user command, to automatically delete one further message header from said display if such is still present; said processor being adapted to cause successive deletions to begin at a user-marked location in the display; said complete email message string exceeding an available capacity for simultaneous display of successive text lines; and said processor being adapted to cause successive repetition of said user command to cause increasing lines of remaining message body text to be simultaneously displayed to the user.

6. An email display apparatus as in claim 5 wherein said user command detector includes at least one hot key on a keyboard associated with the email display apparatus.

7. An email display as in claim 5 wherein said processor is adapted to cause successive deletions to occur in a downward direction through the message string.

8. An email display apparatus as in claim 5 wherein said processor is adapted to cause successive deletions to occur in an upward direction through the message string.

9. An email display apparatus as in claim 5 comprising a handheld sized mobile wireless communication device having a correspondingly limited display area.

10. A machine readable computer program storage medium on which is stored at least one computer program which, when executed in a suitable computer, effects a method for improving readability of an email message string according to any one of claim 1 to claim 4.

## Patentansprüche

1. Verfahren zum Verbessern eine Lesbarkeit einer e-Mail-Nachrichten-Folge, die auf einer tragbar ausgebildeten mobilen drahtlosen Kommunikationsvorrichtung, welche einen entsprechend begrenzten Anzeigebereich aufweist, angezeigt wird, wobei die Folge aufeinanderfolgende Nachrichten-Kopfzeilen mit deren entsprechend zugeordneten Nachrichten-Körpern umfasst, durch:
Automatisches Bestimmen von Teilen einer derartigen Nachrichten-Folge, die ein möglicherweise größeres Interesse für einen Leser aufweist,
Anzeigen von wenigstens einem Teil einer vollständigen e-Mail-Nachrichten-Folge, die aufeinanderfolgende Nachrichten-Kopfzeilen mit deren entsprechend zugeordneten Nachrichten-Körpern umfasst, und
Anzeigen eines derartig bestimmten Teiles der e-Mail-Nachrichten-Folge, um so deren Lesbarkeit zu verbessern,
wobei das Verfahren **gekennzeichnet ist durch**:
Den Schritt eines Anzeigens eines derartig bestimmten Teiles, der ein automatisches Löschen einer Nachrichten-Kopfzeile von einer solchen Anzeige, nachdem ein vordefinierter Benutzerbefehl erfasst wird, umfasst,
nach jeder Wiederholung des vordefinierten Benutzerbefehles, der erfasst wird, automatisches Löschen einer weiteren Nachrichten-Kopfzeile von einer solchen Anzeige, wenn eine Solche noch vorhanden ist, wobei die nachfolgenden Löschungen an einer Benutzer-markierten Stelle auf der Anzeige beginnen,
wobei die vollständige e-Mail-Nachrichten-Folge eine verfügbare Kapazität für eine gleichzeitige Anzeige von aufeinanderfolgenden Textzeilen überschreitet, und
wobei eine nachfolgende Wiederholung des vordefinierten Benutzerbefehls ein Erhöhen von Zeilen eines verbleibenden Nachrichten-Körpertextes veranlasst, dem Benutzer gleichzeitig angezeigt zu werden.

2. Verfahren nach Anspruch 1, wobei der vorbestimmte Benutzerbefehl durch Betätigung von wenigstens einer Schnelltaste auf einer Tastatur, die einer Vorrichtung zugeordnet ist, auf welcher die Anzeige erscheint, vorgenommen wird.

3. Verfahren nach Anspruch 1, wobei aufeinanderfolgende Löschungen in einer Richtung nach unten durch die Nachrichten-Folge auftreten.

4. Verfahren nach Anspruch 1, wobei aufeinanderfolgende Löschungen in einer Richtung nach oben durch die Nachrichten-Folge auftreten.

5. Tragbar ausgebildete mobile drahtlose Kommunikationsvorrichtung, die einen entsprechend beschränkten Anzeigebereich aufweist, wobei die Vorrichtung eine e-Mail-Anzeigeeinrichtung umfasst, die in der Lage ist zum:
Komprimieren einer Anzeige einer e-Mail-Nachrichten-Folge, um eine Lesbarkeit der e-Mail-Nachrichten-Folge durch automatisches Bestimmen von Teilen einer derartigen Nachrichten-Folge, die ein möglicherweise größeres Interesse für einen Leser aufweist, zu verbessern, wobei die Einrichtung eine visuelle Anzeige umfasst, die zum Anzeigen von wenigstens einem Teil einer vollständigen e-Mail-Nachrichten-Folge, die nachfolgende Nachrichten-Kopfzeilen mit deren entsprechend zugeordneten Nachrichten-Körpern umfasst, in der Lage ist, und
Anzeigen eines derartig bestimmten Teiles der e-Mail-Nachrichten-Folge, um deren Lesbarkeit zu verbessern,
wobei die Einrichtung durch einen e-Mail-Anzeigeprozessor **gekennzeichnet** ist, der eine Benutzerbefehls-Erfassungseinrichtung und einen Prozessor umfasst, welcher nach Erfassen eines deratigen Befehls eine Nachrichten-Kopfzeile automatisch von einer solchen Anzeige löscht, wobei der Prozess geeignet ist, nach einem Erfassen einer Wiederholung des Benutzerbefehles eine weiteren Nachrichten-Kopfzeile von der Anzeige automatisch zu löschen, wenn eine Solche noch vorhanden ist, wobei der Prozessor geeignet ist, aufeinanderfolgende Löschungen zu veranlassen, an einer
Benutzer-markierten Stelle auf der Anzeige zu beginnen, wobei die vollständige die e-Mail-Nachrichten-Folge eine verfügbare Kapazität für eine gleichzeitige Anzeige von aufeinanderfolgenden Textzeilen überschreitet, und wobei der Prozessor geeignet ist, eine nachfolgende Wiederholung des Benutzerbefehles zum Erhöhen von Zeilen eines verbleibenden Nachrichten-Körpertextes zu veranlassen, dem Benutzer gleichzeitig angezeigt zu werden.

6. e-Mail-Anzeigeeinrichtung nach Anspruch 5, wobei die Benutzerbefehls-Erfassungseinrichtung wenigstens eine Schnelltaste auf einer Tastatur, welche der e- Mail-Anzeigeeinrichtung zugeordnet ist, umfasst.

7. e-Mail-Anzeige nach Anspruch 5, wobei der Prozessor geeignet ist, aufeinanderfolgende Löschungen zu veranlassen, in einer Richtung nach unten durch die Nachrichten-Folge aufzutreten.

8. e-Mail-Anzeigeeinrichtung nach Anspruch 5, wobei der Prozessor geeignet ist, aufeinanderfolgende Löschungen zu veranlassen, in einer Richtung nach oben durch die Nachrichten-Folge aufzutreten.

9. e-Mail-Anzeigeeinrichtung nach Anspruch 5, wobei die tragbar ausgebildete mobile drahtlose Kommunikationsvorrichtung einen entsprechend beschränkten Anzeigebereich umfasst.

10. Maschinen-lesbares Computerprogramm-Speichermedium, auf welchem wenigstens ein Computerprogramm gespeichert ist, das, wenn in einem geeigneten Computer ausgeführt, ein Verfahren zum Verbessern einer Lesbarkeit einer e-Mail-Nachrichten-Folge nach einem der Ansprüche 1 bis 4 durchführt.

## Revendications

1. Procédé pour améliorer la lisibilité d'une suite de caractères d'un message électronique affichée sur un dispositif de télécommunications sans fil mobile de poche ayant une zone d'affichage limitée de manière correspondante, la suite de caractères comprenant des en-têtes de message successifs avec leurs corps de message associés respectifs, en :
déterminant automatiquement des parties d'une telle suite de caractères de message ayant peut-être un intérêt plus grand pour un lecteur ;
affichant au moins une partie d'une suite de caractères complète du message électronique comprenant des en-têtes de message successifs avec leurs corps de message associés respectifs ; et
affichant une telle partie déterminée de la suite de caractères du message électronique de manière à augmenter sa lisibilité ;
ledit procédé étant **caractérisé par** :
l'étape qui consiste à afficher une telle partie déterminée comprenant l'effacement automatique d'un en-tête de message sur un tel affichage lorsqu'une instruction d'utilisateur prédéfinie est détectée ;
à chaque répétition de la détection de ladite instruction d'utilisateur prédéfinie, l'étape qui consiste à effacer automatiquement sur un tel affichage un autre en-tête de message si celui-ci est encore présent, lesdits effacements successifs commençant à un emplacement marqué par l'utilisateur sur l'affichage ;
ladite suite de caractères complète du message électronique dépassant une capacité disponible pour afficher simultanément des lignes de texte successives ; et
la répétition successive de ladite instruction d'utilisateur prédéfinie conduisant à une augmentation des lignes du texte de corps de message restant à afficher simultanément pour l'utilisateur.

2. Procédé selon la revendication 1, dans lequel ladite instruction d'utilisateur prédéfinie est entrée par l'actionnement d'au moins une touche d'accès direct sur un clavier associé à un dispositif sur lequel apparaît l'affichage.

3. Procédé selon la revendication 1, dans lequel des effacements successifs se produisent dans un sens descendant par l'intermédiaire de la suite de caractères du message.

4. Procédé selon la revendication 1, dans lequel des effacements successifs se produisent dans un sens montant par l'intermédiaire de la suite de caractères du message.

5. Dispositif de télécommunications sans fil mobile de poche ayant une zone d'affichage limitée de manière correspondante, le dispositif comprenant un appareil d'affichage de message électronique capable de :
comprimer l'affichage d'une suite de caractères de message électronique pour améliorer la lisibilité de la suite de caractères du message électronique en déterminant automatiquement des parties d'une telle suite de caractères de message ayant peut-être un intérêt plus grand pour un lecteur, l'appareil comprenant un affichage visuel capable d'afficher au moins une partie d'une suite de caractères complète du message électronique comprenant des en-têtes de message successifs avec leurs corps de message associés respectifs ; et
afficher une telle partie déterminée de la suite de caractères du message électronique de manière à améliorer sa lisibilité,
ledit appareil étant **caractérisé par** un processeur d'affichage de message électronique comprenant un détecteur d'instruction d'utilisateur et un processeur qui, lorsqu'une telle instruction est détectée, efface automatiquement un en-tête de message sur un tel affichage ; ledit processeur étant adapté pour, lorsqu'une répétition de ladite instruction d'utilisateur est détectée, effacer automatiquement sur ledit affichage un autre en-tête de message si celui-ci est encore présent ; ledit processeur étant adapté pour conduire des effacements successifs à commencer à un emplacement marqué par l'utilisateur sur l'affichage ; ladite suite de caractères complète du message électronique dépassant une capacité disponible pour afficher simultanément des lignes de texte successives ; et ledit processeur étant adapté pour conduire la répétition successive de ladite instruction d'utilisateur à conduire à une augmentation des lignes du texte de corps de message restant à afficher simultanément pour l'utilisateur.

6. Appareil d'affichage de message électronique selon la revendication 5, dans lequel ledit détecteur d'instruction d'utilisateur comprend au moins une touche d'accès direct sur un clavier associé à l'appareil d'affichage de message électronique.

7. Appareil d'affichage de message électronique selon la revendication 5, dans lequel ledit processeur est adapté pour conduire des effacements successifs à se produire dans un sens descendant par l'intermédiaire de la suite de caractères du message.

8. Appareil d'affichage de message électronique selon la revendication 5, dans lequel ledit processeur est adapté pour conduire des effacements successifs à se produire dans un sens montant par l'intermédiaire de la suite de caractères du message.

9. Appareil d'affichage de message électronique selon la revendication 5, comprenant un dispositif de télécommunications sans fil mobile de poche ayant une zone d'affichage limitée de manière correspondante.

10. Support de stockage de programme informatique lisible par une machine sur lequel est stocké au moins un programme informatique qui, lorsqu'il est exécuté dans un ordinateur approprié, exécute un procédé pour améliorer la lisibilité d'une suite de caractères d'un message électronique selon l'une quelconque des revendications 1 à 4.
